# EUROPÄISCHE PATENTSCHRIFT

(11) **EP 2 037 159 B1**
(45) Veröffentlichungstag und Bekanntmachung des Hinweises auf die Patenterteilung: **24.10.2012**
(21) Anmeldenummer: 08163728.2
(22) Anmeldetag: 05.09.2008
(51) Int. Cl.: F16H 61/70, F16H 61/04, F16H 63/50

(54) **Verfahren zur Schaltsteuerung eines automatisierten Gruppengetriebes**
Method for controlling the switching of an automated group transmission
Procédé de commande de changement de vitesse d'une boîte de vitesses à plusieurs groupes automatisée

(30) Priorität: 15.09.2007 DE 102007043694
(43) Veröffentlichungstag der Anmeldung: 18.03.2009
(73) Patentinhaber: ZF Friedrichshafen AG, 88046 Friedrichshafen (DE)
(72) Erfinder: Bader, Josef, 88045 Friedrichshafen (DE); Graf, Andreas, 78333 Stockach - Wahlwies (DE); Steinborn, Mario, 88046 Friedrichshafen (DE); Hafen, Thomas, 88682 Salem (DE); Miller, Martin, 88090 Immenstaad (DE)

(56) Entgegenhaltungen:
- DE-A1-102004 055 857
- DE-A1-102005 002 496
- JP-A- 2001 263 472

## Beschreibung

Die Erfindung betrifft ein Verfahren zur Schaltsteuerung eines automatisierten Gruppengetriebes, das in einem Antriebsstrang eines Kraftfahrzeugs zwischen einem Antriebsmotor und einem Achsantrieb angeordnet ist und mindestens ein mehrstufiges Hauptgetriebe sowie eine diesem nachgeschaltete zweistufige Bereichsgruppe umfasst, und bei dem das Hauptgetriebe in Vorgelegebauweise mit mindestens einer mit einer steuerbaren Getriebebremse versehenen Vorgelegewelle ausgeführt ist, die Eingangswelle über eine steuerbare Trennkupplung mit dem Antriebsmotor in Verbindung steht, und das Hauptgetriebe sowie die Bereichsgruppe jeweils über paarweise in einem gemeinsamen Schaltpaket mit zwei Schaltstellungen und einer Neutralstellung zusammengefasste unsynchronisierte Klauenkupplungen schaltbar sind, wobei bei einer Bereichsschaltung sowohl in dem Hauptgetriebe als auch in der Bereichsgruppe jeweils ein Wechsel zwischen zwei Übersetzungsstufen erfolgt.

Gruppengetriebe mit einem mehrgängigen Hauptgetriebe und einer diesem antriebstechnisch vorgeschalteten Splitgruppe sowie einer dem Hauptgetriebe antriebstechnisch nachgeschalteten Bereichsgruppe sind seit längerem bekannt und kommen bevorzugt in Nutzfahrzeugen zur Anwendung. Durch eine zumeist zweistufig ausgeführte Splitgruppe mit einem in etwa der Hälfte eines mittleren Übersetzungssprungs zwischen zwei aufeinander folgenden Übersetzungsstufen des Hauptgetriebes entsprechenden Übersetzungssprung werden die Übersetzungssprünge des Hauptgetriebes halbiert und die Anzahl der insgesamt zur Verfügung stehenden Gänge des Gruppengetriebes verdoppelt. Durch eine üblicherweise zweistufige Bereichsgruppe mit einem in etwa um einen mittleren Übersetzungssprung zwischen zwei aufeinander folgenden Übersetzungsstufen des Hauptgetriebes über dem gesamten Übersetzungssprung des Hauptgetriebes liegenden Übersetzungssprung wird die Spreizung des Gesamtgetriebes in etwa verdoppelt und die Anzahl der insgesamt zur Verfügung stehenden Gänge des Gruppengetriebes nochmals verdoppelt. Hieraus ergibt sich in Verbindung mit einem dreistufigen Hauptgetriebe (mit drei Vorwärtsgangstufen und einer Rückwärtsgangstufe) ein 12-gängiges Gruppengetriebe mit insgesamt zwölf Vorwärtsgängen und maximal vier Rückwärtsgängen, und in Verbindung mit einem vierstufigen Hauptgetriebe mit vier Vorwärtsgangstufen und einer Rückwärtsgangstufe ein 16-gängiges Gruppengetriebe mit insgesamt sechzehn Vorwärtsgängen und maximal vier Rückwärtsgängen. Ein solches Gruppengetriebe weist gegenüber einem Einzelgetriebe mit einer vergleichbaren Anzahl von Gängen sowie ähnlicher Gangabstufung und Spreizung deutlich kompaktere Abmessungen und ein geringeres Gewicht auf. Da viele Schaltungen in einem Gruppengetriebe aber den Wechsel von Übersetzungsstufen in mehreren Teilgetrieben erfordern und somit relativ kompliziert ablaufen, sind die meisten bekannten Gruppengetriebe entweder teilautomatisiert oder vollautomatisiert schaltbar ausgebildet.

Ein Überblick über automatisierte Gruppengetriebe der Anmelderin ist in der Zeitschrift ATZ 9/2004 auf den Seiten 772 - 783 veröffentlicht. Aus der als AS-Tronic-Familie bezeichneten Baureihe automatisierter Schaltgetriebe sind die für mittelschwere Nutzfahrzeuge konzipierten Getriebe der AS-Tronic-mid-Baureihe und die für schwere Nutzfahrzeuge vorgesehenen Getriebe der AS-Tronic-Baureihe jeweils als Gruppengetriebe mit einem mehrstufigen, d.h. mit drei oder vier Vorwärtsstufen versehenen Hauptgetriebe, einer dem Hauptgetriebe vorgeschalteten zweistufigen Splitgruppe und einer dem Hauptgetriebe nachgeschalteten zweistufigen Bereichsgruppe ausgebildet. Das Hauptgetriebe ist jeweils in Vorgelegebauweise ausgeführt, mit unsynchronisierten Klauenkupplungen versehen, und weist im Fall der AS-Tronic-mid-Baureihe eine einzige Vorgelegewelle sowie im Fall der AS-Tronic-Baureihe aus Gründen der Gewichts- und Bauraumoptimierung zwei Vorgelegewellen auf. In beiden Baureihen ist das Hauptgetriebe wahlweise in einer Direktgangausführung (i_{HG_min} = 1) oder in einer Schnellgangausführung (i_{HG_min} < 1) verfügbar. Die Splitgruppe ist jeweils als ein Vorgelegegetriebe mit zwei schaltbaren Eingangskonstanten für das Hauptgetriebe ausgebildet. Die Bereichsgruppe ist jeweils als zweistufiges Planetengetriebe mit einer schaltbaren Direktverbindung (i_{GP} = 1) und einer alternativ schaltbaren hohen Übersetzung (i_{GP} >> 1) ausgeführt.

Ein Gruppengetriebe mit einem mehrstufigen Hauptgetriebe in Vorgelegebauweise, einer diesem vorgeschalteten Splitgruppe mit zwei schaltbaren Eingangskonstanten des Hauptgetriebes und einer dem Hauptgetriebe nachgeschalteten Bereichsgruppe in Planetenbauweise ist des weiteren aus der WO 1999/00612 A1 bekannt. Dieses bekannte Gruppengetriebe kann durch die Ausrüstung mit einem unterschiedlichen, eine Eingangskonstante des Hauptgetriebes bildenden Zahnradpaar wahlweise als ein Direktganggetriebe oder als ein Schnellganggetriebe ausgeführt werden. Eine dazu alternative Variante eines Gruppengetriebes mit einem zweistufigen Hauptgetriebe in Vorgelegebauweise (mit zwei Vorwärtsgangstufen und einer Rückwärtsgangstufe), einer diesem vorgeschalteten dreistufigen Splitgruppe und einer dem Hauptgetriebe nachgeschalteten Bereichsgruppe in Planetenbauweise ist in der EP 0 769 641 B1 beschrieben.

Bei den Gruppengetrieben der AS-Tronic-Baureihe und der AS-Tronic-mid-Baureihe sind bislang die jeweils in einem gemeinsamen Schaltpaket zusammengefassten Schaltkupplungen der Splitgruppe und der Bereichsgruppe synchronisiert ausgebildet, wogegen das Hauptgetriebe klauengeschaltet ausgeführt, das heißt mittels unsynchronisierter Klauenkupplungen schaltbar ist. Da die betreffenden synchronisierten Schaltkupplungen aber aufgrund eines komplizierten Aufbaus vergleichsweise teuer sind, einen relativ großen Bauraum erfordern und verschleißbedingt die Lebensdauer des gesamten Gruppengetriebes beschränken, könnte für zukünftige Ausführungen derartiger Gruppengetriebe vorgesehen werden, neben dem Hauptgetriebe auch die Bereichsgruppe klauengeschaltet auszuführen.

In einem derartigen Gruppengetriebe ist aufgrund der unsynchronisierten Ausführung der Bereichsgruppe ein spezieller Schaltungsablauf erforderlich, der sich deutlich von demjenigen eines weitgehend identischen, jedoch mit synchronisierter Bereichsgruppe versehenen Gruppengetriebes unterscheidet. Ein geeignetes Verfahren zur Schaltsteuerung eines Gruppengetriebes mit einer unsynchronisierten Bereichsgruppe wird beispielsweise in der DE 101 52 857 A1 vorgeschlagen. In diesem Verfahren ist im wesentlichen vorgesehen, dass bei einer Bereichsschaltung zunächst die Vorschaltgruppe und die Bereichsgruppe zur Unterbrechung des Kraftflusses jeweils in ihre Neutralstellung geschaltet werden, dass dann das Hauptgetriebe mittels einer Getriebebremse abgebremst wird, und dass anschließend eine Führung der Drehzahl des Antriebsmotors auf die Synchrondrehzahl des Zielgangs beginnt. Nach dem Schalten des Hauptgetriebes wird die Vorschaltgruppe synchronisiert in ihre Ziel-Übersetzungsstufe geschaltet. Mit Erreichen der Synchrondrehzahl durch den Antriebsmotor wird dann die Ziel-Übersetzungsstufe der Bereichsgruppe eingelegt.

Das Dokument DE 10 2005 002 496 A1, das als nächstliegender Stand der Technik angesehen wird, offenbart einen Verfahren zur Schaltsteuerung eines automatisierten Gruppengetriebes, das in einem Antriebsstrang eines Kraftfahrzeugs zwischen einem Antriebsmotor und einem Achsantrieb angeordnet ist und mindestens ein mehrstufiges Hauptgetriebe sowie eine diesem nachgeschaltete zweistufige Bereichsgruppe umfasst, und bei dem das Hauptgetriebe in Vorgelegebauweise mit mindestens einer Vorgelegewelle ausgeführt ist, die Eingangswelle über eine steuerbare Trennkupplung mit dem Antriebsmotor in Verbindung steht, und das Hauptgetriebe sowie die Bereichsgruppe jeweils über paarweise in einem gemeinsamen Schaltpaket mit zwei Schaltstellungen und einer Neutralstellung zusammengefasste unsynchronisierte Klauenkupplungen schaltbar sind, wobei bei einer Bereichsschaltung sowohl in dem Hauptgetriebe als auch in der Bereichsgruppe jeweils ein Wechsel zwischen zwei Übersetzungsstufen erfolgt.

Nachteilig an diesem bekannten Verfahren ist allerdings, dass das Vorhandensein einer Vorschaltgruppe bzw. einer dem Hauptgetriebe vorgeschalteten Splitgruppe vorausgesetzt wird, und dass der Schaltungsablauf nur bei einer Bereichshochschaltung anwendbar ist sowie durch das vor dem Einlegen der Ziel-Übersetzungsstufe der Bereichsgruppe abzuwartende Erreichen der Synchrondrehzahl durch den Antriebsmotor verzögert wird.

Vor diesem Hintergrund liegt der vorliegenden Erfindung die Aufgabe zugrunde, ein verbessertes Verfahren zur Schaltsteuerung eines automatisierten Gruppengetriebes der eingangs genannten Art anzugeben, das zur Durchführung von Bereichshochschaltungen und Bereichsrückschaltungen geeignet ist, das gegenüber dem bekannten Verfahren einen schnelleren Schaltungsablauf ermöglicht, und das auch bei Gruppengetrieben anwendbar ist, die keine Vorschaltgruppe bzw. keine dem Hauptgetriebe vorgeschaltete Splitgruppe aufweisen.

Die Erfindung geht gemäß den Merkmalen des Hauptanspruchs aus von einem Verfahren zur Schaltsteuerung eines automatisierten Gruppengetriebes, das in einem Antriebsstrang eines Kraftfahrzeugs zwischen einem Antriebsmotor und einem Achsantrieb angeordnet ist und mindestens ein mehrstufiges Hauptgetriebe sowie eine diesem nachgeschaltete zweistufige Bereichsgruppe umfasst, und bei dem das Hauptgetriebe in Vorgelegebauweise mit mindestens einer mit einer steuerbaren Getriebebremse versehenen Vorgelegewelle ausgeführt ist, die Eingangswelle über eine steuerbare Trennkupplung mit dem Antriebsmotor in Verbindung steht, und das Hauptgetriebe sowie die Bereichsgruppe jeweils über paarweise in einem gemeinsamen Schaltpaket mit zwei Schaltstellungen und einer Neutralstellung zusammengefasste unsynchronisierte Klauenkupplungen schaltbar sind, wobei bei einer Bereichsschaltung sowohl in dem Hauptgetriebe als auch in der Bereichsgruppe jeweils ein Wechsel zwischen zwei Übersetzungsstufen erfolgt.

Die Lösung der Aufgabe eine Bereichshochschaltung betreffend besteht darin, dass die Bereichshochschaltung mit den folgenden Schritten durchgeführt wird:
- SH1): Lastabbau des Antriebsmotors,
- SH2a): Auslegen der Ist-Übersetzungsstufe der Bereichsgruppe GP = N und
- SH2b): vollständiges Ausrücken der Trennkupplung,
- SH3a): Synchronisieren der Ziel-Übersetzungsstufe der Bereichsgruppe durch eine Betätigung der Getriebebremse und
- SH3b): Beginn der Steuerung des Antriebsmotors auf die Zieldrehzahl der Eingangswelle,
- SH4): Einlegen der Ziel-Übersetzungsstufe der Bereichsgruppe,
- SH5): Auslegen der Ist-Übersetzungsstufe des Hauptgetriebes,
- SH6): Synchronisieren der Ziel-Übersetzungsstufe des Hauptgetriebes durch ein teilweises Einrücken der Trennkupplung,
- SH7): Einlegen der Ziel-Übersetzungsstufe des Hauptgetriebes,
- SH8a): Vollständiges Einrücken der Trennkupplung und
- SH8b): Lastaufbau des Antriebsmotors.

Vorteilhafte und zweckmäßige Ausgestaltungen sowie Weiterbildungen des erfindungsgemäßen Verfahrens zur Steuerung einer Bereichshochschaltung sind Gegenstand der Ansprüche 2 bis 7 und 11 bis 13.

Bei dem erfindungsgemäßen Verfahren wird demnach von einem automatisierten Gruppengetriebe ausgegangen, das in einem Antriebsstrang eines Kraftfahrzeugs zwischen einem Antriebsmotor und einem Achsantrieb angeordnet ist, und das mindestens ein mehrstufiges Hauptgetriebe HG, HG' sowie eine diesem antriebstechnisch nachgeschaltete zweistufige Bereichsgruppe GP umfasst. Das Hauptgetriebe HG, HG' ist, wie bei den bekannten Gruppengetrieben üblich, in Vorgelegebauweise ausgeführt und weist neben einer Eingangswelle W_{GE}, die über eine steuerbare Trennkupplung K mit dem Antriebsmotor in Verbindung steht, und einer Hauptwelle W_{H} mindestens eine mit einer steuerbaren Getriebebremse Br versehene Vorgelegewelle W_{VG1}, W_{VG} auf. Das Hauptgetriebe HG, HG' und die Bereichsgruppe GP sind jeweils über paarweise in einem gemeinsamen Schaltpaket S1, S2, SP bzw. S1', S2', S3', SP mit zwei Schaltstellungen und einer Neutralstellung N zusammengefasste unsynchronisierte Klauenkupplungen schaltbar.

Bei einem derartigen Gruppengetriebe beinhaltet eine Bereichsschaltung bekanntlich sowohl in dem Hauptgetriebe HG, HG' als auch in der Bereichsgruppe GP jeweils einen Wechsel zwischen zwei Übersetzungsstufen. Bei einer Bereichshochschaltung wird das Hauptgetriebe HG, HG' von der höchsten Übersetzungsstufe G3, G4' in die niedrigste Übersetzungsstufe G1, G1' zurückgeschaltet und die Bereichsgruppe GP von der Langsamfahrstufe L in die Schnellfahrstufe S hochgeschaltet.

Damit dies in möglichst schneller und komfortabler Weise erfolgt, ist erfindungsgemäß vorgesehen, dass nach einem weitgehend erfolgten Lastabbau des Antriebsmotors (Verfahrensschritt SH1) zunächst die Ist-Übersetzungsstufe (Langsamfahrstufe L) der Bereichsgruppe GP ausgelegt (Verfahrensschritt SH2a), d.h. die Bereichsgruppe GP in die Neutralstellung N geschaltet wird (GP = N), und dass in etwa zeitgleich die Trennkupplung K vollständig ausgerückt wird (Verfahrensschritt SH2b, K = 0). Danach wird durch eine entsprechende Betätigung der Getriebebremse (Br > 0) die Vorgelegewelle W_{VG1} bzw. W_{VG} und die mit dieser über die noch eingelegte Ist-Übersetzungsstufe G3, G4' des Hauptgetriebes HG, HG' verbundene Hauptwelle W_{H} abgebremst und damit die Ziel-Übersetzungsstufe (Schnellfahrstufe S) der Bereichsgruppe GP synchronisiert (Verfahrensschritt SH3a). Etwa gleichzeitig beginnt die Steuerung des Antriebsmotors auf die Zieldrehzahl der Eingangswelle W_{GE} für die Gesamtübersetzung des Zielgangs (Verfahrensschritt SH3b).

Mit Erreichen der Synchrondrehzahl an der betreffenden Schaltkupplung wird die Ziel-Übersetzungsstufe (Schnellfahrstufe S) der Bereichsgruppe GP eingelegt (Verfahrensschritt SH4) und in etwa zeitgleich oder anschließend die Ist-Übersetzungsstufe G3, G4' des Hauptgetriebes HG, HG' ausgelegt (Verfahrensschritt (SH5), d.h. das Hauptgetriebe HG, HG' in seine Neutralstellung geschaltet (HG = N bzw. HG' = N). Anschließend wird die Ziel-Übersetzungsstufe G1, G1' des Hauptgetriebes HG, HG' durch ein teilweises Einrücken der Trennkupplung (K > 0) durch eine Beschleunigung der Eingangswelle W_{GE} synchronisiert (Verfahrensschritt SH6).

Mit Erreichen der Synchrondrehzahl an der entsprechenden Schaltkupplung wird die Ziel-Übersetzungsstufe G1, G1' des Hauptgetriebes HG, HG' eingelegt (Verfahrensschritt SH7), bevor die Trennkupplung K vollständig eingerückt wird (Verfahrensschritt SH8a, K = 1) und der Lastaufbau des Antriebsmotors erfolgt (Verfahrensschritt SH8b).

Das Verfahren gemäß der Erfindung ist in der vorbeschriebenen Form sowohl bei einem Gruppengetriebe ohne Vorschaltgruppe bzw. ohne vorgeschaltete Splitgruppe GV als auch bei einem Gruppengetriebe mit Vorschaltgruppe bzw. mit vorgeschalteter Splitgruppe GV, bei dem die Splitgruppe bei der Bereichshochschaltung nicht umgeschaltet wird, anwendbar.

Wenn, wie bei einem mehrstufigen Hauptgetriebe HG, HG' üblich, die niedrigste Übersetzungsstufe G1, G1' und die höchste Übersetzungsstufe G3, G4' unterschiedlichen Schaltpaketen S1, S2; S1', S2' bzw. Schaltgassen zugeordnet sind, ist bei der Bereichshochschaltung innerhalb des Hauptgetriebes HG, HG' zusätzlich ein Gassenwechsel, also eine Umschaltung des Hauptgetriebes HG, HG' auf die Schaltgasse der Ziel-Übersetzungsstufe erforderlich. Diese Umschaltung der Schaltgasse erfolgt zweckmäßig in etwa zeitgleich zur Synchronisierung der Ziel-Übersetzungsstufe des Hauptgetriebes HG, HG', also parallel zu Verfahrensschritt SH6.

Zur weiteren Beschleunigung des Schaltungsablaufs ist es sinnvoll, wenn das Auslegen der Ist-Übersetzungsstufe G3, G4' des Hauptgetriebes HG, HG' schon vor dem Einlegen der Ziel-Übersetzungsstufe S der Bereichsgruppe GP erfolgt, wenn also im Unterschied zu dem Verfahrensablauf nach Anspruch 1 der Verfahrensschritt SH5 vor dem Verfahrensschritt SH4 durchgeführt wird.

Dadurch kann die Umschaltung des Hauptgetriebes HG, HG' auf die Schaltgasse der Ziel-Übersetzungsstufe G1, G1', die bei einem Hauptgetriebe HG, HG' mit einer Zuordnung der niedrigsten Übersetzungsstufe G1, G1' und der höchsten Übersetzungsstufe G3, G4' zu unterschiedlichen Schaltpaketen S1, S2; S1', S2' bzw. Schaltgassen erforderlich ist, schon in etwa zeitgleich zum Einlegen der Ziel-Übersetzungsstufe S der Bereichsgruppe GP, also parallel zu Verfahrensschritt SH4 erfolgen, wodurch der gesamte Schaltungsablauf weiter verkürzt wird.

Zur weiteren Beschleunigung des Schaltungsablaufs kann die Drehzahlanpassung des Antriebsmotors zeitgleich zur Synchronisierung der Ziel-Übersetzungsstufe G1, G1' des Hauptgetriebes HG, HG' in Verfahrensschritt SH6 durch eine Betätigung der Getriebebremse (Br > 0) unterstützt werden.

Wenn das Gruppengetriebe mit einer dem Hauptgetriebe HG antriebstechnisch vorgeschalteten, synchronisiert schaltbaren zweistufigen Vorschaltgruppe bzw. Splitgruppe GV versehen ist, und die Splitgruppe GV bei der Bereichshochschaltung ebenfalls umgeschaltet werden soll, so kann diese Umschaltung der Splitgruppe GV wahlweise unmittelbar nach dem Auslegen der Ist-Übersetzungsstufe G3, G4' des Hauptgetriebes HG, HG', also nach dem Verfahrensschritt SH5, oder in etwa zeitgleich zur Synchronisierung der Ziel-Übersetzungsstufe G1, G1' des Hauptgetriebes HG, HG', d.h. parallel zum Verfahrensschritt SH6 erfolgen.

Die Lösung der Aufgabe eine Bereichsrückschaltung betreffend geht gemäß den Merkmalen des Oberbegriffs des Anspruchs 8 aus von einem Verfahren zur Schaltsteuerung eines automatisierten Gruppengetriebes, das in einem Antriebsstrang eines Kraftfahrzeugs zwischen einem Antriebsmotor und einem Achsantrieb angeordnet ist und mindestens ein mehrstufiges Hauptgetriebe sowie eine diesem antriebstechnisch nachgeschaltete zweistufige Bereichsgruppe umfasst, und bei dem das Hauptgetriebe in Vorgelegebauweise mit mindestens einer mit einer steuerbaren Getriebebremse versehenen Vorgelegewelle ausgeführt ist, die Eingangswelle über eine steuerbare Trennkupplung mit dem Antriebsmotor in Verbindung steht, und das Hauptgetriebe sowie die Bereichsgruppe jeweils über paarweise in einem gemeinsamen Schaltpaket mit zwei Schaltstellungen und einer Neutralstellung zusammengefasste unsynchronisierte Klauenkupplungen schaltbar sind, wobei bei einer Bereichsschaltung sowohl in dem Hauptgetriebe als auch in der Bereichsgruppe jeweils ein Wechsel zwischen zwei Übersetzungsstufen erfolgt.

Die Bereichsrückschaltung wird gemäß der Erfindung mit den folgenden Schritten durchgeführt:
- SR1): Lastabbau des Antriebsmotors,
- SR2a): Auslegen der Ist-Übersetzungsstufe des Hauptgetriebes und
- SR2b): vollständiges Ausrücken der Trennkupplung,
- SR3a): Synchronisieren der Ziel-Übersetzungsstufe des Hauptgetriebes durch eine Betätigung der Getriebebremse und
- SR3b): Beginn der Steuerung des Antriebsmotors auf die Zieldrehzahl der Eingangswelle,
- SR4a): Einlegen der Ziel-Übersetzungsstufe des Hauptgetriebes und
- SR4b): Auslegen der Ist-Übersetzungsstufe der Bereichsgruppe,
- SR5): Synchronisieren der Ziel-Übersetzungsstufe der Bereichsgruppe (GP) durch ein teilweises Einrücken der Trennkupplung,
- SR6): Einlegen der Ziel-Übersetzungsstufe der Bereichsgruppe,
- SR7a): Vollständiges Einrücken der Trennkupplung und
- SR7b): Lastaufbau des Antriebsmotors.

Vorteilhafte und zweckmäßige Ausgestaltungen und Weiterbildungen des erfindungsgemäßen Verfahrens zur Steuerung einer Bereichsrückschaltung sind in den Ansprüchen 9 bis 13 angegeben.

Bei einer Bereichsrückschaltung wird im Gegensatz zu einer Bereichshochschaltung das Hauptgetriebe HG, HG' von der niedrigsten Übersetzungsstufe G1, G1' in die höchste Übersetzungsstufe G3, G4' hochgeschaltet und die Bereichsgruppe GP von der Schnellfahrstufe S in die Langsamfahrstufe L zurückgeschaltet.

Damit dies in möglichst schneller und komfortabler Weise erfolgt, ist erfindungsgemäß vorgesehen, dass nach einem weitgehend erfolgten Lastabbau des Antriebsmotors (Verfahrensschritt SR1) zunächst die Ist-Übersetzungsstufe G1, G1' des Hauptgetriebes HG, HG' ausgelegt (Verfahrensschritt SR2a), also das Hauptgetriebe HG, HG' in seine Neutralstellung N geschaltet wird (HG = N bzw. HG' = N), und dass in etwa zeitgleich die Trennkupplung K vollständig ausgerückt wird (Verfahrensschritt SR2b, K = 0). Danach wird durch eine entsprechende Betätigung der Getriebebremse (Br > 0) die Vorgelegewelle W_{VG1} bzw. W_{VG} sowie die mit dieser über eine Eingangskonstante (K1, K2; K0) verbundene Eingangswelle W_{GE} abgebremst und damit die Ziel-Übersetzungsstufe G3, G4' des Hauptgetriebes HG, HG' synchronisiert (Verfahrensschritt SR3a).

Etwa gleichzeitig beginnt die Steuerung des Antriebsmotors auf die Zieldrehzahl der Eingangswelle W_{GE} für die Gesamtübersetzung des Zielgangs (Verfahrensschritt SR3b). Mit Erreichen der Synchrondrehzahl an der betreffenden Schaltkupplung wird die Ziel-Übersetzungsstufe G3, G4' des Hauptgetriebes HG, HG' eingelegt (Verfahrensschritt SR4a) und in etwa zeitgleich die Ist-Übersetzungsstufe (Schnellfahrstufe S) der Bereichsgruppe GP ausgelegt (Verfahrensschritt (SR4b), also die Bereichsgruppe GP in ihre Neutralstellung geschaltet (GP = N).

Anschließend wird die Ziel-Übersetzungsstufe (Langsamfahrstufe L) der Bereichsgruppe GP durch ein teilweises Einrücken der Trennkupplung (K > 0) durch eine Beschleunigung der Eingangswelle W_{GE} und der mit dieser über die eingelegte Ziel-Übersetzungsstufe G3, G4' des Hauptgetriebes HG, HG' verbundenen Hauptwelle W_{H} synchronisiert (Verfahrensschritt SR5). Mit Erreichen der Synchrondrehzahl an der entsprechenden Schaltkupplung wird die Ziel-Übersetzungsstufe (Langsamfahrstufe L) der Bereichsgruppe GP eingelegt (Verfahrensschritt SR6), bevor die Trennkupplung K vollständig eingerückt wird (Verfahrensschritt SR7a, K = 1) und der Lastaufbau des Antriebsmotors erfolgt (Verfahrensschritt SR7b).

Wenn in an sich üblicher Bauart die niedrigste Übersetzungsstufe G1, G1' und die höchste Übersetzungsstufe G3, G4' des Hauptgetriebes HG, HG' unterschiedlichen Schaltpaketen S1, S2; S1', S2' bzw. Schaltgassen zugeordnet sind, ist bei der Bereichsrückschaltung innerhalb des Hauptgetriebes HG, HG' zusätzlich ein Gassenwechsel, also eine Umschaltung des Hauptgetriebes HG, HG' auf die Schaltgasse der Ziel-Übersetzungsstufe G3, G4' erforderlich. Diese Umschaltung der Schaltgasse erfolgt zweckmäßig in etwa zeitgleich zur Synchronisierung der Ziel-Übersetzungsstufe G3, G4' des Hauptgetriebes HG, HG', d.h. parallel zu Verfahrensschritt SR3a.

Wenn das Gruppengetriebe mit einer dem Hauptgetriebe HG antriebstechnisch vorgeschalteten, synchronisiert schaltbaren zweistufigen Vorschaltgruppe bzw. Splitgruppe GV versehen ist, und die Splitgruppe GV bei der Bereichsrückschaltung ebenfalls umgeschaltet werden soll, so erfolgt diese Umschaltung der Splitgruppe GV zweckmäßig unmittelbar vor dem Einlegen der Ziel-Übersetzungsstufe G3, G4' des Hauptgetriebes HG, HG', demnach also vor dem Verfahrensschritt SR4a.

Während des Lastabbaus des Antriebsmotors in dem jeweils ersten Verfahrensschritt SH1 bzw. SR1 wird die Trennkupplung K vorteilhaft schon teilweise bis oberhalb der Schlupfgrenze ausgerückt. Hierdurch kann die Trennkupplung K nachfolgend schneller geöffnet werden, da dann keine Wartezeit für die Vorbefüllung des Kupplungsstellers mit einem Druckmittel und für die Überbrückung eines Leerweges der Kupplungsstelleinrichtung mehr anfällt.

Wird beim Einlegen der Ziel-Übersetzungsstufe G1, G1' bzw. G3, G4' des Hauptgetriebes HG, HG', also in Verfahrensschritt SH7 oder SR4a, und/oder beim Einlegen der Ziel-Übersetzungsstufe S bzw. L der Bereichsgruppe GP, d.h. in Verfahrensschritt SH4 oder SR6, das Auftreten einer Zahn-auf-Zahn-Stellung an der betreffenden Klauenkupplung festgestellt, so wird der Schaltungsablauf unter Aufrechterhaltung der betreffenden Einrückungsstellkraft zweckmäßig fortgesetzt, da die Zahn-auf-Zahn-Stellung durch eine nachfolgend zwangsläufig auftretende Relativdrehung der betreffenden Getriebewellen (W_{VG1}, W_{H}; W_{VG}, W_{H}; W_{H}, W_{GA}) aufgehoben wird, und die Klauenkupplung dann ohne eine Verzögerung des Schaltungsablaufs eingerückt werden kann.

Das erfindungsgemäße Verfahren beruht somit im wesentlichen darauf, dass die klauengeschalteten Teilgetriebe des Gruppengetriebes, also das Hauptgetriebe HG, HG' und die diesem nachgeschaltete Bereichsgruppe GP, bei einer Bereichsschaltung jeweils über steuerbare Elemente, wie die Getriebebremse Br und die Trennkupplung K, aktiv synchronisiert werden. Hieraus ergibt sich in Verbindung mit der gewählten Reihenfolge der Verfahrensschritte eine geringstmögliche Gesamtschaltzeit und ein hoher Schaltkomfort der Bereichsschaltungen.

Das erfindungsgemäße Verfahren kann aber nicht nur, wie primär vorgesehen ist, bei einem Gruppengetriebe mit zwei klauengeschalteten Teilgetrieben (HG, GP; HG', GP) angewendet werden, sondern ist auch bei Gruppengetrieben anwendbar, die nur ein oder gar kein unsynchronisiertes Teilgetriebe aufweisen. Anders ausgedrückt sind alle genannten Verfahrensschritte auch bei Gruppengetrieben anwendbar, die zumindest ein synchronisiertes Teilgetriebe (HG, GP; HG', GP) aufweisen. Die Anwendung des erfindungsgemäßen Verfahrens dient in diesem Fall zur Entlastung und Unterstützung der betreffenden Synchronisierungen und ist insbesondere bei Kälte, bei verschlissenen Synchronisierungen oder bei aus anderen Gründen auftretenden Schaltproblemen sinnvoll.

Zur Verdeutlichung der Erfindung ist der Beschreibung eine Zeichnung mit Ausführungsbeispielen beigefügt. In dieser zeigt
- Fig. 1: einen bevorzugten Ablauf einer Bereichshochschaltung nach dem erfindungsgemäßen Verfahren in Form eines vereinfachten Zeitdiagramms,
- Fig. 2: einen bevorzugten Ablauf einer Bereichsrückschaltung nach dem erfindungsgemäßen Verfahren in Form eines vereinfachten Zeitdiagramms,
- Fig. 3: den schematischen Aufbau eines ersten Gruppengetriebes, bei dem das erfindungsgemäße Verfahren anwendbar ist, und
- Fig. 4: den schematischen Aufbau eines zweiten Gruppengetriebes, bei dem das erfindungsgemäße Verfahren anwendbar ist.

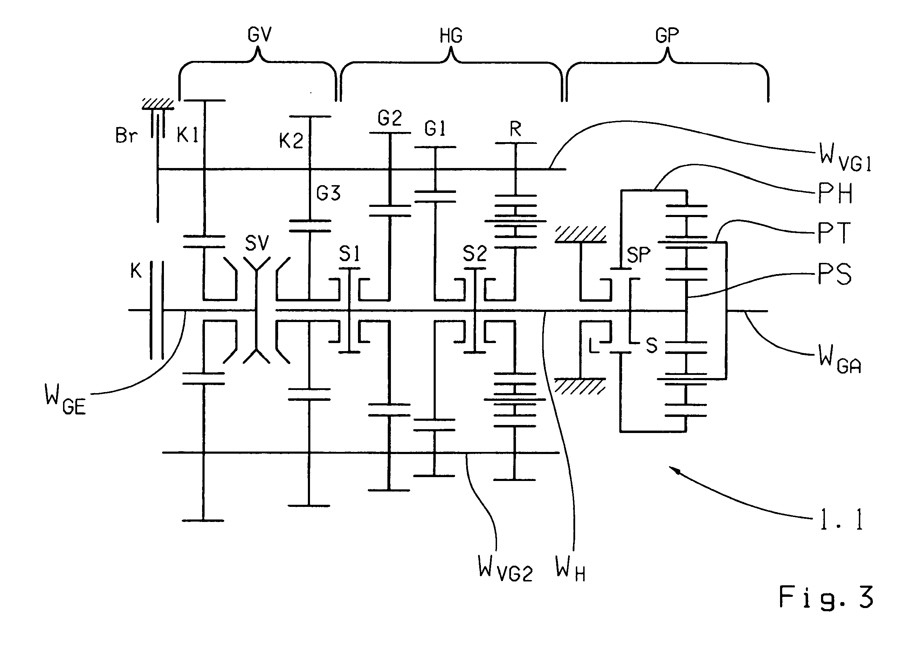

In Fig. 3 ist ein Gruppengetriebe 1.1 dargestellt, bei dem das erfindungsgemäße Verfahren anwendbar ist. Das Gruppengetriebe 1.1 umfasst ein Hauptgetriebe HG, eine diesem antriebstechnisch vorgeschaltete Vorschaltgruppe GV, und eine dem Hauptgetriebe HG nachgeschaltete Bereichsgruppe GP, welches in seinem funktionstechnischen Aufbau weitgehend einer Ausführungsform eines an sich bekannten Gruppengetriebes der AS-Tronic-Baureihe entspricht.

Das Hauptgetriebe HG ist als Direktganggetriebe in Vorgelegebauweise ausgeführt und weist eine Hauptwelle W_{H} sowie zwei Vorgelegewellen W_{VG1} und W_{VG2} auf, wobei die erste Vorgelegewelle W_{VG1} mit einer steuerbaren Getriebebremse Br gekoppelt ist. Das Hauptgetriebe HG ist mit drei Übersetzungsstufen G1, G2, G3 für die Vorwärtsfahrt und einer Übersetzungsstufe R für die Rückwärtsfahrt dreistufig ausgebildet. Die Losräder der Übersetzungsstufen G1, G2, R sind jeweils drehbar auf der Hauptwelle W_{H} gelagert und mittels zugeordneter Klauenkupplungen schaltbar. Die zugeordneten Festräder sind drehfest auf den Vorgelegewellen W_{VG1}, W_{VG2} angeordnet. Die als Direktgang ausgebildete höchste Übersetzungsstufe G3 ist über eine Direktschaltkupplung schaltbar. Die Schaltkupplungen der Übersetzungsstufen G3, G2 sowie die Schaltkupplungen der Übersetzungsstufen G1, R sind jeweils in einem gemeinsamen Schaltpaket S1, S2 zusammengefasst.

Die Vorschaltgruppe GV ist zweistufig ausgebildet und ebenfalls in Vorgelegebauweise ausgeführt, wobei die beiden Übersetzungsstufen K1 und K2 der Vorschaltgruppe GV zwei schaltbare Eingangskonstanten des Hauptgetriebes HG bilden. Durch eine geringe Übersetzungsdifferenz der beiden Übersetzungsstufen K1, K2 ist die Vorschaltgruppe GV als Splitgruppe ausgelegt. Das Losrad der ersten Übersetzungsstufe K1 ist drehbar auf der Eingangswelle W_{GE} gelagert, die über eine steuerbare Trennkupplung K mit einem nicht abgebildeten, als Verbrennungsmotor ausgebildeten Antriebsmotor in Antriebsverbindung steht. Das Losrad der zweiten Übersetzungsstufe K2 ist drehbar auf der Hauptwelle W_{H} gelagert. Die Festräder beider Übersetzungsstufen K1, K2 sind ersichtlich jeweils drehfest auf den eingangsseitig verlängerten Vorgelegewellen W_{VG1}, W_{VG2} des Hauptgetriebes HG angeordnet. Die synchronisiert ausgebildeten Schaltkupplungen der Vorschaltgruppe GV sind in einem gemeinsamen Schaltpaket SV zusammengefasst.

Die antriebstechnisch nachgeschaltete Bereichsgruppe GP ist ebenfalls zweistufig ausgebildet, jedoch in Planetenbauweise und mit einem einfachen Planetenradsatz ausgeführt. Das Sonnenrad PS ist drehfest mit der ausgangsseitig verlängerten Hauptwelle W_{H} des Hauptgetriebes HG verbunden. Der Planetenträger PT ist drehfest mit der Ausgangswelle W_{GA} des Gruppengetriebes gekoppelt. Das Hohlrad PH des Planentenradsatzes steht mit einem Schaltpaket SP mit zwei Schaltkupplungen in Verbindung, durch welche die Bereichsgruppe GP wechselweise durch die Verbindung des Hohlrades PH mit einem feststehenden Gehäuseteil in eine Langsamfahrstufe L und durch die Verbindung des Hohlrades PH mit der Hauptwelle W_{H} bzw. dem Sonnenrad PS in eine Schnellfahrstufe S schaltbar ist. Im Gegensatz zur bisherigen Ausführung der AS-Tronic-Getriebe sind die Schaltkupplungen des Schaltpakets SP vorliegend unsynchronisiert ausgebildet.

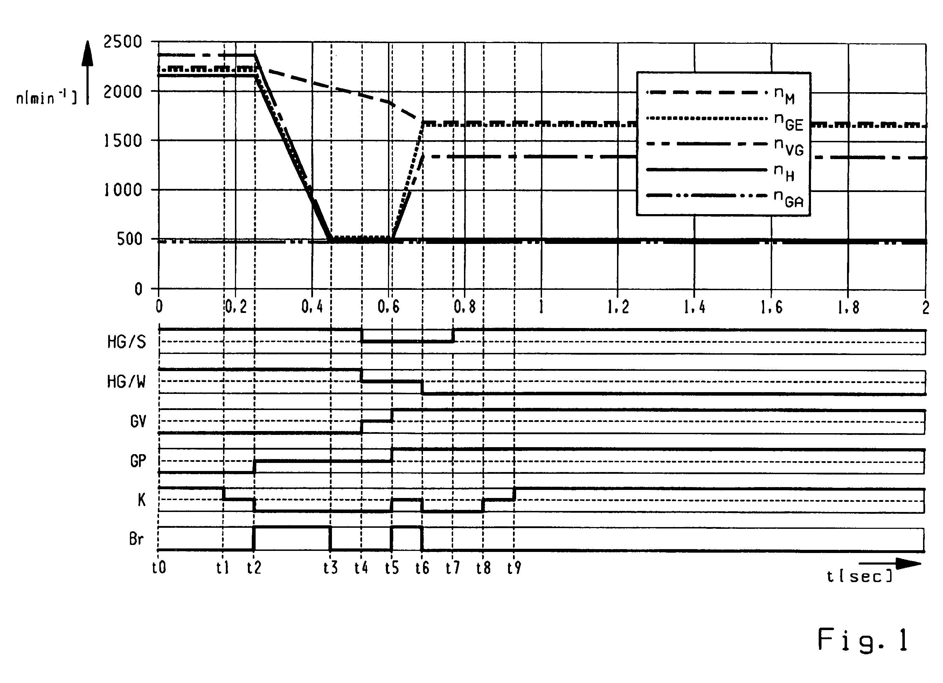

Nachfolgend wird ein weiterer, jedoch nicht beanspruchter Ablauf einer bei dem Gruppengetriebe 1.1 nach Fig. 3 durchgeführten Bereichshochschaltung anhand der Diagramme von Fig. 1 erläutert. Im oberen Teil von Fig. 1 sind die Zeitverläufe der Drehzahl n_{M} des Antriebsmotors, der Drehzahl n_{GE} der Eingangswelle W_{GE}, der Drehzahl n_{VG} der ersten Vorgelegewelle W_{VG1}, der Drehzahl n_{H} der HauptWelle W_{H} und der Drehzahl n_{GA} der Ausgangswelle W_{GA} abgebildet.

Im unteren Teil von Fig. 1 sind schematisch die Betätigungsvorgänge der Getriebeelemente dargestellt, unter der Bezeichnung HG/S Schaltvorgänge innerhalb des Hauptgetriebes HG, wie das Auslegen der Ist-Übersetzungsstufe G3 und das Einlegen der Ziel-Übersetzungsstufe G1, unter der Bezeichnung HG/W Wählvorgänge innerhalb des Hauptgetriebes HG, d.h. das Wechseln der Schaltgasse bzw. der Schaltpakete von S1 zu S2, unter der Bezeichnung GV Schaltvorgänge, d.h. das Umschalten der Übersetzungsstufen von K2 zu K1, innerhalb der Splitgruppe GV, unter GP Schaltvorgänge innerhalb der Bereichsgruppe GP, wie das Auslegen der Ist-Übersetzungsstufe L und das Einlegen der Ziel-Übersetzungsstufe S, unter der Bezeichnung K eine Betätigung bzw. das Einrücken der Trennkupplung K, und unter der Bezeichnung Br eine Betätigung bzw. das Schließen der Getriebebremse Br.

Zum Zeitpunkt t0 beginnt der Lastabbau an dem Antriebsmotor, der spätestens zum Zeitpunkt t2 abgeschlossen ist. Parallel dazu wird beginnend im Zeitpunkt t1 die Trennkupplung K vorgeöffnet, d.h. bis oberhalb der Schlupfgrenze ausgerückt. Zum Zeitpunkt t2 wird zunächst die Ist-Übersetzungsstufe L der Bereichsgruppe GP ausgelegt, also die Bereichsgruppe GP in Neutral N geschaltet (GP = N), und in etwa zeitgleich die Trennkupplung K vollständig ausgerückt (K = 0).

Danach wird durch eine entsprechende Betätigung der Getriebebremse Br zwischen den Zeitpunkten t2 und t3 die Vorgelegewelle W_{VG1} und die mit dieser über die noch eingelegte Ist-Übersetzungsstufe G3 des Hauptgetriebes HG verbundene Hauptwelle W_{H} abgebremst und damit die Ziel-Übersetzungsstufe S der Bereichsgruppe GP synchronisiert. Etwa gleichzeitig beginnt die Steuerung des Antriebsmotors auf die Zieldrehzahl der Eingangswelle W_{GE} für die Gesamtübersetzung des Zielgangs.

Nach dem Erreichen der Synchrondrehzahl an der betreffenden Schaltkupplung SP im Zeitpunkt t3 wird zum Zeitpunkt t4 zunächst die Ist-Übersetzungsstufe G3 des Hauptgetriebes HG ausgelegt, die Umschaltung der Schaltgasse des Hauptgetriebes HG von Schaltpaket S1 zu Schaltpaket S2 begonnen und die synchronisierte Umschaltung der Splitgruppe GV von der Ist-Übersetzungsstufe K2 in die Ziel-Übersetzungsstufe K1 gestartet.

Zum Zeitpunkt t5 wird die Ziel-Übersetzungsstufe S der Bereichsgruppe GP eingelegt. Zu diesem Zeitpunkt ist auch die Umschaltung der Splitgruppe GV über das Schaltpaket SV abgeschlossen. Nachfolgend wird die Ziel-Übersetzungsstufe G1 des Hauptgetriebes HG durch ein teilweises Einrücken der Trennkupplung K durch eine Beschleunigung der Eingangswelle W_{GE} synchronisiert. Gleichzeitig sorgt eine Betätigung der Getriebebremse Br für eine Verzögerung des Antriebsmotors und somit für eine Beschleunigung der Drehzahlanpassung des Antriebsmotors.

Nach dem Erreichen der Synchrondrehzahl an der entsprechenden Schaltkupplung S2 und dem Abschluss des Gassenwechsels im Zeitpunkt t6 wird die Getriebebremse Br wieder gelöst und die Trennkupplung K geöffnet. Danach wird die Ziel-Übersetzungsstufe G1 des Hauptgetriebes HG zum Zeitpunkt t7 eingelegt, bevor die Trennkupplung K zwischen den Zeitpunkten t8 und t9 wieder vollständig eingerückt wird, und anschließend der Lastaufbau des Antriebsmotors erfolgt.

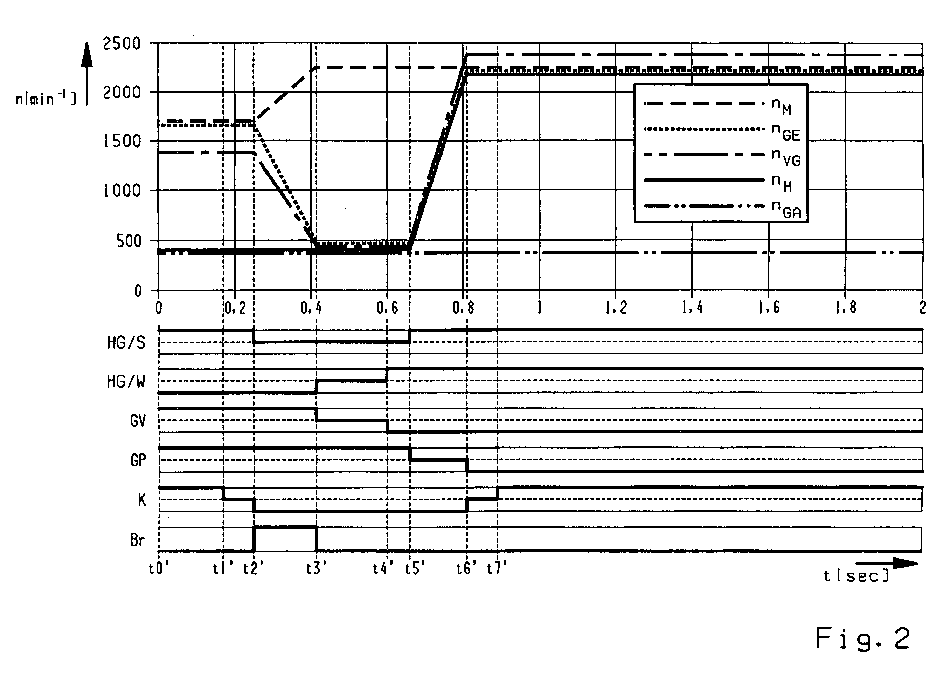

Ein erfindungsgemäßer Ablauf einer bei dem Gruppengetriebe 1.1 nach Fig. 3 durchgeführten Bereichsrückschaltung wird nachfolgend anhand der Diagramme von Fig. 2 erläutert, bei der dieselbe Darstellungsweise wie in Fig. 1 verwendet ist.

Zum Zeitpunkt t0' beginnt der Lastabbau an dem Antriebsmotor, der spätestens zum Zeitpunkt t2' abgeschlossen ist. Parallel dazu wird beginnend im Zeitpunkt t1' die Trennkupplung K vorgeöffnet, d.h. bis oberhalb der Schlupfgrenze ausgerückt. Zum Zeitpunkt t2' wird zunächst die Ist-Übersetzungsstufe G1 des Hauptgetriebes HG ausgelegt, also das Hauptgetriebe HG in seine Neutralstellung N geschaltet (HG = N), und in etwa zeitgleich die Trennkupplung K vollständig ausgerückt (K = 0).

Danach wird durch eine entsprechende Betätigung der Getriebebremse Br zwischen den Zeitpunkten t2' und t3' die Vorgelegewelle W_{VG1} sowie die mit dieser über die eingelegte Eingangskonstante K2 verbundene Eingangswelle W_{GE} abgebremst und damit die Ziel-Übersetzungsstufe G3 des Hauptgetriebes HG synchronisiert. Etwa gleichzeitig beginnt die Steuerung des Antriebsmotors auf die Zieldrehzahl der Eingangswelle W_{GE} für die Gesamtübersetzung des Zielgangs. Nach dem Erreichen der Synchrondrehzahl an der betreffenden Schaltkupplung S1 zum Zeitpunkt t3' erfolgt im Zeitpunkt t4' zunächst der Gassenwechsel innerhalb des Hauptgetriebes HG, d.h. das Umschalten von dem Schaltpaket S2 auf das Schaltpaket S1, und die synchronisierte Umschaltung der Splitgruppe GV über das Schaltpaket SV von der Eingangskonstante K1 auf die Eingangskonstante K2.

Danach wird zum Zeitpunkt t5' die Ziel-Übersetzungsstufe G3 des Hauptgetriebes HG eingelegt und in etwa zeitgleich die Ist-Übersetzungsstufe S der Bereichsgruppe GP ausgelegt, also die Bereichsgruppe GP in Neutral geschaltet (GP = N). Anschließend wird die Ziel-Übersetzungsstufe L der Bereichsgruppe GP durch ein teilweises Einrücken der Trennkupplung (K > 0) durch eine Beschleunigung der Eingangswelle W_{GE} und der mit dieser über die eingelegte Ziel-Übersetzungsstufe G3 des Hauptgetriebes HG verbundene HauptWelle W_{H} synchronisiert. Mit Erreichen der Synchrondrehzahl an der entsprechenden Schaltkupplung SP im Zeitpunkt t6' wird die Ziel-Übersetzungsstufe L der Bereichsgruppe GP eingelegt, bevor die Trennkupplung K zum Zeitpunkt t7' vollständig eingerückt wird, und anschließend der Lastaufbau des Antriebsmotors erfolgt.

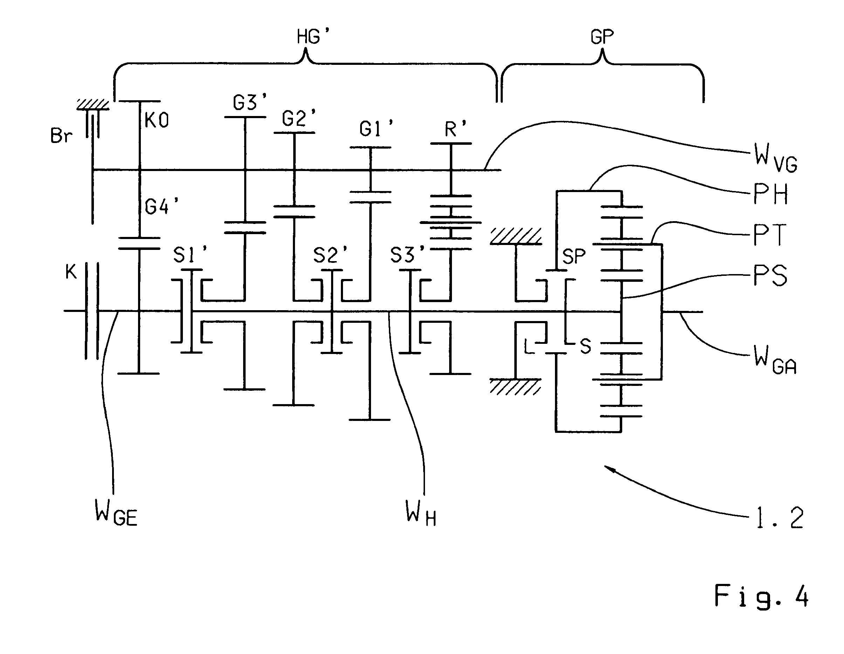

Ein weiteres Gruppengetriebe 1.2, bei dem das erfindungsgemäße Verfahren zur Anwendung kommen kann, ist in Fig. 4 abgebildet. Dieses Gruppengetriebe 1.2 umfasst ein Hauptgetriebe HG' und eine diesem nachgeschaltete Bereichsgruppe GP und entspricht in seinem funktionstechnischen Aufbau weitgehend einer Ausführungsform eines bekannten Gruppengetriebes für leichte Nutzfahrzeuge.

Das Hauptgetriebe HG' ist als Direktganggetriebe in Vorgelegebauweise ausgeführt und weist eine Eingangswelle W_{GE}, eine Hauptwelle W_{H} und eine Vorgelegewelle W_{VG} auf, wobei die Vorgelegewelle W_{VG} mit einer steuerbaren Getriebebremse Br gekoppelt ist. Die Eingangswelle W_{GE} steht eingangsseitig über eine steuerbare Trennkupplung K mit einem nicht abgebildeten Antriebsmotor in Verbindung und ausgangsseitig über ein eine Eingangskonstante K0 bildendes Zahnradpaar permanent mit der Vorgelegewelle W_{VG} in Triebverbindung. Das Hauptgetriebe HG' ist mit vier Übersetzungsstufen G1' bis G4' für die Vorwärtsfahrt und einer Übersetzungsstufe R' für die Rückwärtsfahrt vierstufig ausgebildet.

Die Losräder der Übersetzungsstufen G1', G2', G3', R' sind jeweils drehbar auf der Hauptwelle W_{H} gelagert und über zugeordnete Klauenkupplungen schaltbar. Die zugeordneten Festräder sind drehfest auf der Vorgelegewelle W_{VG} angeordnet. Die als Direktgang ausgebildete höchste Übersetzungsstufe G4' ist über eine Direktschaltkupplung schaltbar. Die Schaltkupplungen der Übersetzungsstufen G4' und G3' sowie die Schaltkupplungen der Übersetzungsstufen G2' und G1' sind jeweils in einem gemeinsamen Schaltpaket S1' bzw. S2' zusammengefasst. Ein drittes Schaltpaket S3' weist nur die Schaltkupplung der Übersetzungsstufe für die Rückwärtsfahrt R' auf.

Die nachgeschaltete Bereichsgruppe GP entspricht in Aufbau und Wirkungsweise der Bereichsgruppe GP des Gruppengetriebes 1.1 nach Fig.3.

Die zuvor anhand von Fig. 1 und Fig. 2 beschriebenen Verfahrensabläufe zur Durchführung einer Bereichshochschaltung und einer Bereichsrückschaltung sind bei dem Gruppengetriebe 1.2 identisch anwendbar, sofern diejenigen Verfahrensschritte, welche das Umschalten der Splitgruppe GV betreffen, weggelassen werden, und wenn anstelle der Bezeichnungen für das Hauptgetriebe HG und dessen Vorgelegewelle W_{VG1} sowie die betreffenden Schaltpakete S1, S2 und Übersetzungsstufen G1, G3 gemäß Fig. 3 nunmehr die Bezeichnungen für das Hauptgetriebe HG' und dessen Vorgelegewelle W_{VG} sowie die betreffenden Schaltpakete S1', S2' und Übersetzungsstufen G1', G4' gemäß Fig. 4 verwendet werden. Auf eine Wiederholung dieser bereits genannten Verfahrensschritte kann daher verzichtet werden.

### Bezugszeichen

- 1.1: Gruppengetriebe
- 1.2: Gruppengetriebe
- Br: Getriebebremse
- GP: Bereichsgruppe
- GV: Splitgruppe, Vorschaltgruppe
- G1: Erste Übersetzungsstufe von HG
- G1': Erste Übersetzungsstufe von HG'
- G2: Zweite Übersetzungsstufe von HG
- G2': Zweite Übersetzungsstufe von HG'
- G3: Dritte Übersetzungsstufe von HG
- G3': Dritte Übersetzungsstufe von HG'
- G4': Vierte Übersetzungsstufe von HG'
- HG: Hauptgetriebe
- HG': Hauptgetriebe
- HG/S: Schaltvorgang in HG
- HG/W: Wählvorgang in HG
- i_{GV}: Übersetzung von GV
- i_{GP}: Übersetzung von GP
- i_{HG}: Übersetzung von HG
- K: Trennkupplung
- K0: Eingangskonstante von HG'
- K1: Erste Übersetzungsstufe von GV
- K2: Zweite Übersetzungsstufe von GV
- L: Langsamfahrstufe von GP
- n: Drehzahl
- N: Neutralstellung
- n_{GA}: Drehzahl von W_{GA}
- n_{GE}: Drehzahl von W_{GE}
- n_{H}: Drehzahl von W_{H}
- n_{M}: Drehzahl des Antriebsmotors
- n_{VG}: Drehzahl von W_{VG1}, W_{VG}
- PH: Hohlrad von GP
- PS: Sonnenrad von GP
- PT: Planetenträger von GP
- R: Rückwärts-Übersetzungsstufe von HG
- R': Rückwärts-Übersetzungsstufe von HG'
- S: Schnellfahrstufe von GP
- SP: Schaltpaket von GP
- S1: Erstes Schaltpaket von HG
- S1': Erstes Schaltpaket von HG'
- S2: Zweites Schaltpaket von HG'
- S2': Zweites Schaltpaket von HG
- S3': Drittes Schaltpaket von HG'
- SV: Schaltpaket von GV
- SH1 - SH8b: Verfahrensschritte bei Bereichshochschaltung
- SR1 - SR7b: Verfahrensschritte bei Bereichsrückschaltung
- t: Zeit
- t0 - t9: Zeitpunkte bei Bereichshochschaltung
- t0' - t7': Zeitpunkte bei Bereichsrückschaltung
- W_{GA}: Ausgangswelle
- W_{GE}: Eingangswelle
- W_{H}: Hauptwelle
- W_{VG}: Vorgelegewelle von HG'
- W_{VG1}: Erste Vorgelegewelle von HG
- W_{VG2}: Zweite Vorgelegewelle von HG

## Patentansprüche

1. Verfahren zur Schaltsteuerung eines automatisierten Gruppengetriebes, das in einem Antriebsstrang eines Kraftfahrzeugs zwischen einem Antriebsmotor und einem Achsantrieb angeordnet ist und mindestens ein mehrstufiges Hauptgetriebe (HG, HG') sowie eine diesem nachgeschaltete zweistufige Bereichsgruppe (GP) umfasst, und bei dem das Hauptgetriebe (HG, HG') in Vorgelegebauweise mit mindestens einer mit einer steuerbaren Getriebebremse (Br) versehenen Vorgelegewelle (W_{VG1}, W_{VG}) ausgeführt ist, die Eingangswelle (W_{GE}) über eine steuerbare Trennkupplung (K) mit dem Antriebsmotor in Verbindung steht, und das Hauptgetriebe (HG, HG') sowie die Bereichsgruppe (GP) jeweils über paarweise in einem gemeinsamen Schaltpaket (S1, S2, S1' - S3', SP) mit zwei Schaltstellungen und einer Neutralstellung (N) zusammengefasste unsynchronisierte Klauenkupplungen schaltbar sind, wobei bei einer Bereichsschaltung sowohl in dem Haupfigetriebe (HG, HG') als auch in der Bereichsgruppe (GP) jeweils ein Wechsel zwischen zwei Übersetzungsstufen erfolgt, wobei bei einer Bereichshochschaltung das Hauptgetriebe (HG, HG') von der höchsten Übersetzungsstufe (G3, G4') in die niedrigste Übersetzungsstufe (G1, G1') zurückgeschaltet wird und die Bereichsgruppe (GP) von der Langsamfahrstufe L in die Schnellfahrstufe S hochgeschaltet wird, wobei bei dieser Bereichhochschaltung die Schritte in der folgenden Reihenfolge durchgeführt werden:
SH1) Lastabbau des Antriebsmotors,
SH2a) Auslegen der Ist-Übersetzungsstufe der Bereichsgruppe (GP = N) und
SH2b) vollständiges Ausrücken der Trennkupplung (K = 0), etwa gleichzeitig mit dem Verfahrensschnitt SH2a,
SH3a) Synchronisieren der Ziel-Übersetzungsstufe der Bereichsgruppe (GP) durch eine Betätigung der Getriebebremse (Br > 0) und
SH3b) Beginn der Steuerung des Antriebsmotors auf die Zieldrehzahl der Eingangswelle (W_{GE}), etwa gleichzeitig mit dem Verfahrensschnitt SH3a),
SH4) Einlegen der Ziel-Übersetzungsstufe der Bereichsgruppe (GP),
SH5) Auslegen der Ist-Übersetzungsstufe des Hauptgetriebes (HG = N),
SH6) Synchronisieren der Ziel-Übersetzungsstufe des Hauptgetriebes (HG) durch ein teilweises Einrücken der Trennkupplung (K > 0),
SH7) Einlegen der Ziel-Übersetzungsstufe des Hauptgetriebes (HG),
SH8a) Vollständiges Einrücken der Trennkupplung (K = 1) und
SH8b) Lastaufbau des Antriebsmotors.

2. Verfahren nach Anspruch 1, **dadurch gekennzeichnet, dass** bei einem Hauptgetriebe (HG, HG'), bei dem die niedrigste Übersetzungsstufe (G1, G1') und die höchste Übersetzungsstufe (G3, G4') unterschiedlichen Schaltgassen zugeordnet sind, die erforderliche Umschaltung des Hauptgetriebes (HG, HG') auf die Schaltgasse der Ziel-Übersetzungsstufe in etwa zeitgleich zur Synchronisierung der Ziel-Übersetzungsstufe des Hauptgetriebes (HG, HG'; SH6) erfolgt.

3. Verfahren nach Anspruch 1, **dadurch gekennzeichnet, dass** das Auslegen der Ist-Übersetzungsstufe des Hauptgetriebes (HG, HG'; SH5) schon vor dem Einlegen der Ziel-Übersetzungsstufe der Bereichsgruppe (GP, SH4) erfolgt.

4. Verfahren nach Anspruch 3, **dadurch gekennzeichnet, dass** bei einem Hauptgetriebe (HG, HG'), bei dem die niedrigste Übersetzungsstufe (G1, G1') und die höchste Übersetzungsstufe (G3, G4') unterschiedlichen Schaltgassen zugeordnet sind, die Umschaltung des Hauptgetriebes (HG, HG') auf die Schaltgasse der Ziel-Übersetzungsstufe in etwa zeitgleich zum Einlegen der Ziel-Übersetzungsstufe der Bereichsgruppe (GP, SH4) erfolgt.

5. Verfahren nach einem der Ansprüche 1 bis 4, **dadurch gekennzeichnet , dass** die Drehzahlanpassung des Antriebsmotors zeitgleich zur Synchronisierung der Ziel-Übersetzungsstufe des Hauptgetriebes (HG, HG'; SH6) durch eine Betätigung der Getriebebremse (Br > 0) unterstützt wird.

6. Verfahren nach einem der Ansprüche 1 bis 5, **dadurch gekennzeichnet, dass** bei einer Bereichshochschaltung, die eine Umschaltung einer dem Hauptgetriebe (HG) vorgeschalteten, synchronisiert schaltbaren zweistufigen Splitgruppe (GV) beinhaltet, die Umschaltung der Splitgruppe (GV) unmittelbar nach dem Auslegen der Ist-Übersetzungsstufe des Hauptgetriebes (HG, SH5) erfolgt.

7. Verfahren nach einem der Ansprüche 1 bis 5, **dadurch gekennzeichnet , dass** bei einer Bereichshochschaltung, die eine Umschaltung einer dem Hauptgetriebe (HG) vorgeschalteten, synchronisiert schaltbaren zweistufigen Splitgruppe (GV) beinhaltet, die Umschaltung der Splitgruppe (GV) in etwa zeitgleich zur Synchronisierung der Ziel-Übersetzungsstufe des Hauptgetriebes (HG, SH6) erfolgt.

8. Verfahren zur Schaltsteuerung eines automatisierten Gruppengetriebes, das in einem Antriebsstrang eines Kraftfahrzeugs zwischen einem Antriebsmotor und einem Achsantrieb angeordnet ist sowie mindestens ein mehrstufiges Hauptgetriebe (HG, HG') und eine diesem nachgeschaltete zweistufige Bereichsgruppe (GP) umfasst, und bei dem das Hauptgetriebe (HG, HG') in Vorgelegebauweise mit mindestens einer mit einer steuerbaren Getriebebremse (Br) versehenen Vorgelegewelle (W_{VG1}, W_{VG}) ausgeführt ist, die Eingangswelle (W_{GE}) über eine steuerbare Trennkupplung (K) mit dem Antriebsmotor in Verbindung steht, und das Hauptgetriebe (HG, HG') sowie die Bereichsgruppe (GP) jeweils über paarweise in einem gemeinsamen Schaltpaket (S1, S2, S1', S2', S3', SP) mit zwei Schaltstellungen und einer Neutralstellung (N) zusammengefasste unsynchronisierte Klauenkupplungen schaltbar sind, wobei bei einer Bereichsschaltung sowohl in dem Hauptgetriebe (HG, HG') als auch in der Bereichsgruppe (GP) jeweils ein Wechsel zwischen zwei Übersetzungsstufen erfolgt, **dadurch gekennzeichnet, dass** eine Bereichsrückschaltung mit den folgenden Schritten durchgeführt wird:
SR1) Lastabbau des Antriebsmotors,
SR2a) Auslegen der Ist-Übersetzungsstufe des Häuptgetriebes (HG = N) und
SR2b) vollständiges Ausrücken der Trennkupplung (K = 0),
SR3a) Synchronisieren der Ziel-Übersetzungsstufe des Hauptgetriebes (HG) durch eine Betätigung der Getriebebremse (Br > 0) und
SR3b) Beginn der Steuerung des Antriebsmotors auf die Zieldrehzahl der Eingangswelle (W_{GE}),
SR4a) Einlegen der Ziel-Übersetzungsstufe des Hauptgetriebes (HG) und
SR4b) Auslegen der ist-Übersetzungsstufe der Bereichsgruppe (GP = N),
SR5) Synchronisieren der Ziel-Übersetzungsstufe der Bereichsgruppe (GP) durch ein teilweises Einrücken der Trennkupplung (K > 0),
SR6) Einlegen der Ziel-Übersetzungsstufe der Bereichsgruppe (GP),
SR7a) Vollständiges Einrücken der Trennkupplung (K = 1) und
SR7b) Lastaufbau des Antriebsmotors.

9. Verfahren nach Anspruch 8, **dadurch gekennzeichnet, dass** bei einem Hauptgetriebe (HG, HG'), bei dem die niedrigste Übersetzungsstufe (G1, G1') und die höchste Übersetzungsstufe (G3, G4') unterschiedlichen Schaltgassen zugeordnet sind, die Umschaltung des Hauptgetriebes (HG, HG') auf die Schaltgasse der Ziel-Übersetzungsstufe in etwa zeitgleich zur Synchronisierung der Ziel-Übersetzungsstufe des Hauptgetriebes (HG, HG'; SR3a) erfolgt.

10. Verfahren nach Anspruch 8 oder 9, **dadurch gekennzeichnet, dass** bei einer Bereichsrückschaltung, die eine Umschaltung einer dem Hauptgetriebe vorgeschalteten, synchronisiert schaltbaren zweistufigen Splitgruppe (GV) beinhaltet, die Umschaltung der Splitgruppe (GV) unmittelbar vor dem Einlegen der Ziel-Übersetzungsstufe des Hauptgetriebes (HG, SR4a) erfolgt.

11. Verfahren nach einem der Ansprüche 1 bis 10, **dadurch gekennzeichnet, dass** während des Lastabbaus des Antriebsmotors (SH1, SR1) die Trennkupplung (K) schon teilweise bis oberhalb der Schlupfgrenze ausgerückt wird.

12. Verfahren nach einem der Ansprüche 1 bis 11, **dadurch gekennzeichnet, dass** bei einer Ermittlung einer beim Einlegen der Ziel-Übersetzungsstufe des Hauptgetriebes (HG, HG'; SH7, SR4a) und/oder der Bereichsgruppe (GP; SH4, SR6) auftretenden Zahn-auf-Zahn-Stellung der betreffenden Klauenkupplung der Schaltungsablauf unter Aufrechterhaltung der betreffenden Einrückungsstellkraft fortgesetzt wird.

13. Verfahren nach einem der Ansprüche 1 bis 12, **dadurch gekennzeichnet, dass** dieses bei einem Gruppengetriebe verwendet wird, das zumindest ein synchronisiertes Teilgetriebe (HG, GP; HG', GP) aufweist.

## Claims

1. Method for shift control of an automated auxiliary transmission which is arranged in a drivetrain of a motor vehicle between a drive engine and axle drive and comprises at least one multi-stage main transmission (HG, HG') and a two-stage range group (GP) arranged downstream of the latter, and in which the main transmission (HG, HG') is of countershaft design with at least one countershaft (W_{VG1}, W_{VG}) provided with a controllable transmission brake (Br), the input shaft (W_{GE}) is connected via a controllable separating clutch (K) to the drive engine, and the main transmission (HG, HG') and the range group (GP) can in each case be switched by means of unsynchronized claw clutches combined in pairs in a common shift packet (S1, S2, S1' - S3', SP) with two shift positions and a neutral position (N), wherein in the case of a range shift in each case a change between two transmission ratios is carried out in the main transmission (HG, HG') and also in the range group (GP), wherein in the case of a range upshift the main transmission (HG, HG') is shifted back from the highest transmission ratio (G3, G4') into the lowest transmission ratio (G1, G1') and the range group (GP) is shifted up from the slow drive position L into the fast drive position S, wherein in the case of this range upshift the steps are carried out in the following sequence:
SH1) Reduction in load of the drive engine,
SH2a) Disengagement of the current transmission ratio of the range group (GP = N) and
SH2b) Complete disengagement of the separating clutch (K = 0), approximately simultaneously with method step SH2a,
SH3a) Synchronization of the target transmission ratio of the range group (GP) by an activation of the transmission brake (Br > 0), and
SH3b) Start of control of the drive engine to the target rotational speed of the input shaft (W_{GE}), approximately simultaneously with method step SH3a.
SH4) Engagement of the target transmission ratio of the range group (GP),
SH5) Disengagement of the current transmission ratio of the main transmission (HG = N),
SH6) Synchronization of the target transmission ratio of the main transmission (HG) by a partial engagement of the separating clutch (K > 0) ,
SH7) Engagement of the target transmission ratio of the main transmission (HG)
SH8a) Complete engagement of the separating clutch (K = 1) and
SH8b) Build up of load of the drive engine.

2. Method according to Claim 1, **characterized in that**, in the case of a main transmission (HG, HG') in which the lowest transmission ratio (G1, Ge1') and the highest transmission ratio (G3, G4') are assigned to different shift gates, the required switching of the main transmission (HG, HG') to the shift gate of the target transmission ratio is carried out approximately simultaneously with the synchronization of the target transmission ratio of the main transmission (HG, HG'; SH6).

3. Method according to Claim 1, **characterized in that** the disengagement of the current transmission ratio of the main transmission (HG, GH', SH5) is already carried out before the engagement of the target transmission ratio of the range group (GP, SH4).

4. Method according to Claim 3, **characterized in that**, **in that** case of a main transmission (HG, HG') in which the lowest transmission ratio (G1, G1') and the highest transmission ratio (G3, G4') are assigned to different shift gates, the switching of the main transmission (HG, HG') to the shift gate if the target transmission ration is carried out approximately simultaneously with the engagement of the target transmission ratio of the range group (GP, SH4).

5. Method according to one of Claims 1 to 4, **characterized in that** the rotational speed adjustment of the drive engine is supported simultaneously with the synchronization of the target transmission ratio of the main transmission (HG, HG'; SH6) by an activation of the transmission brake (Br > 0).

6. Method according to one of Claims 1 to 5, **characterized in that**, in the case of a range upshift which contains a switching of a two-stage split group (GV), which is arranged upstream of the main transmission (HG) and can be shifted in a synchronized manner, the switching of the split group (GV) is carried out immediately after the disengagement of the current transmission ratio of the main transmission (HG, SH5).

7. Method according to one of Claims 1 to 5, **characterized in that**, in the case of a range upshift which contains a switching of a two-stage split group (GV), which is arranged upstream of the main transmission (HG) and can be shifted in a synchronized manner, the switching of the split group (GV) is carried out approximately simultaneously with the synchronization of the target transmission ratio of the main transmission (HG, SH6).

8. Method for shift control of an automated auxiliary transmission which is arranged in a drivetrain of a motor vehicle between a drive engine and axle drive and comprises at least one multi-stage main transmission (HG, HG') and a two-stage range group (GP) arranged downstream of the latter, and in which the main transmission (HG, HG') is of countershaft design with at least one countershaft (W_{VG1}, W_{VG}) provided with a controllable transmission brake (Br), the input shaft (W_{GE}) is connected via a controllable separating clutch (K) to the drive engine, and the main transmission (HG, HG') and the range group (GP) can in each case be switched by means of unsynchronized claw clutches combined in pairs in a common shift packet (S1, S2, S1', S2', S3', SP) with two shift positions and a neutral position (N), wherein in the case of a range shift in each case a change between two transmission ratios is carried out in the main transmission (HG, HG') and also in the range group (GP), **characterized in that** a range downshift is carried out with the following steps:
SR1) Reduction in load of the drive engine,
SR2a) Disengagement of the current transmission ratio of the main transmission (HG = N) and
SR2b) Complete disengagement of the separating clutch (K = 0),
SR3a) Synchronization of the target transmission ratio of the main transmission (HG) by an activation of the transmission brake (Br > 0) and
(SR3b) Start of control of the drive engine to the target rotational speed of the input shaft (W_{GE}),
SR4a) Engagement of the target transmission ratio of the main transmission (HG) and
SR4b) Disengagement of the current transmission ratio of the range group (GP = N),
SR5) Synchronization of the target transmission ratio of the range group (GP) by a partial engagement of the separating clutch (K > 0),
SR6) Engagement of the target transmission ratio of the range group (GP),
SR7a) Complete engagement of the separating clutch (K = 1) and
SR7b) Build up of load of the drive engine.

9. Method according to Claim 8, **characterized in that**, in the case of a main transmission (HG, HG') in which the lowest transmission ratio (G1, G1') and the highest transmission ratio (G3, G4') are assigned to different shift gates, the switching of the main transmission (HG, HG') to the shift gate of the target transmission ratio is carried out approximately simultaneously with the synchronization of the target transmission ratio of the main transmission (HG, HG'; SR3a).

10. Method according to Claim 8 or 9, **characterized in that**, in the case of a range downshift which contains a switching of a two-stage split group (GV), which is arranged downstream of the main transmission and can be shifted in a synchronized manner, the switching of the split group (GV) is carried out immediately before the engagement of the target transmission ratio of the main transmission (HG, SR4a).

11. Method according to one of Claims 1 to 10, **characterized in that** during the reduction in load of the drive engine (SH1, SR1) the separating clutch (K) is already at least partially disengaged until above the slip threshold.

12. Method according to one of Claims 1 to 11, **characterized in that**, in the case of a determination of a tooth-on-tooth position of the relevant claw clutch which occurs during engagement of the target transmission ratio of the main transmission (HG, HG'; SH7, SR4a) and/or of the range group (GP; SH4, SR6), the shift procedure is continued while maintaining the relevant engagement actuating force.

13. Method according to one of Claims 1 to 12, **characterized in that** said method is used in the case of an auxiliary transmission which has at least one synchronized partial transmission (HG, GP; HG', GP).

## Revendications

1. Procédé de commande de changement de vitesse d'une boîte de vitesses à plusieurs groupes automatisée disposée dans une chaîne de transmission de véhicule automobile entre un moteur d'entraînement et un entraînement d'essieu et comprenant au moins une boîte de vitesses principale (HG, HG') à plusieurs étages ainsi qu'un groupe-relais (GP) à deux étages connecté en aval par rapport à elle et dans lequel la boîte de vitesses principale (HG, HG') est réalisée avec intermédiaire par le biais d'au moins un arbre intermédiaire (W_{VG1}, W_{VG}) pourvu d'un frein de boîte de vitesses (Br) commandable, l'arbre d'entrée (W_{GE}) étant relié au moteur d'entraînement par le biais d'un embrayage de coupure (K) commandable et la boîte de vitesses principale (HG, HG') ainsi que le groupe-relais (GP) pouvant respectivement être connectés par le biais d'embrayages à griffes non synchronisés réunis de façon appariée en un paquet de changement de vitesse (S1, S2, S1' - S3', SP) commun avec deux positions de changement de vitesse et une position neutre (N), une inversion entre deux étages de réduction se produisant respectivement en cas de changement de vitesse relais tant dans la boîte de vitesses principale (HG, HG') que dans le groupe-relais (GP), la boîte de vitesses principale (HG, HG') étant ramenée de l'étage de réduction (G3, G4') le plus élevé à l'étage de réduction (G1, G1') le plus bas en cas de changement de vitesse relais vers une vitesse supérieure et le groupe-relais (GP) étant connecté de façon montante de l'étage de marche lente L vers l'étage de marche rapide S, les étapes suivies en présence de ce changement de vitesse relais vers une vitesse supérieure étant réalisées dans l'ordre suivant :
SH1) sortie de charge du moteur d'entraînement ;
SH2a) désengagement de l'étage de réduction réel du groupe relais (GP = N) ; et
SH2b) débrayage total de l'embrayage de coupure (K = 0), approximativement simultanément avec l'étape de procédé SH2a ;
SH3a) synchronisation de l'étage de réduction cible du groupe relais (GP) par un actionnement du frein de boîte de vitesses (Br > 0) et
SH3b) début de la commande du moteur d'entraînement pour atteindre la vitesse de rotation cible de l'arbre d'entrée (W_{GE}), approximativement simultanément avec l'étape de procédé SH3a ;
SH4) engagement de l'étage de réduction cible du groupe relais (GP) ;
SH5) désengagement de l'étage de réduction réel de la boîte de vitesses principale (HG = N) ;
SH6) synchronisation de l'étage de réduction cible de la boîte de vitesses principale (HG) par embrayage partiel de l'embrayage de coupure (K > 0) ;
SH7) engagement de l'étage de réduction cible de la boîte de vitesses principale (HG) ;
SH8a) embrayage total de l'embrayage de coupure (K = 1) ; et
SH8b) mise en charge du moteur d'entraînement.

2. Procédé selon la revendication 1, **caractérisé en ce qu'**en présence d'une boîte de vitesses principale (HG, HG') dans laquelle l'étage de réduction (G1, G1') inférieur et l'étage de réduction (G3, G4') supérieur sont associés à différents tronçons de changement de vitesse, la commutation nécessaire de la boîte de vitesses principale (HG, HG') vers le tronçon de changement de vitesse de l'étage de réduction cible se produit approximativement simultanément avec la synchronisation de l'étage de réduction cible de la boîte de vitesses principale (HG, HG'; SH6).

3. Procédé selon la revendication 1, **caractérisé en ce que** le désengagement de l'étage de réduction réel de la boîte de vitesses principale (HG, HG' ; SH5) se produit déjà avant l'engagement de l'étage de réduction cible du groupe relais (GP, SH4).

4. Procédé selon la revendication 3, **caractérisé en ce qu'**en présence d'une boîte de vitesses principale (HG, HG') dans laquelle l'étage de réduction (G1, G1') inférieur et l'étage de réduction (G3, G4') supérieur sont associés à différents tronçons de changement de vitesse, la commutation de la boîte de vitesses principale (HG, HG') vers le tronçon de changement de vitesse de l'étage de réduction cible se produit approximativement simultanément avec l'engagement de l'étage de réduction cible du groupe relais (GP, SH4).

5. Procédé selon l'une quelconque des revendications 1 à 4, **caractérisé en ce que** l'ajustement de la vitesse de rotation du moteur d'entraînement est assisté simultanément avec la synchronisation de l'étage de réduction cible de la boîte de vitesses principale (HG, HG' ; SH6) par un actionnement du frein de boîte de vitesses (Br > 0).

6. Procédé selon l'une quelconque des revendications 1 à 5, **caractérisé en ce qu'**en cas de changement de vitesse relais vers une vitesse supérieure contenant une commutation d'un groupe de coupure (GV) à deux étages connecté en amont de la boîte de vitesses principale (HG) et permettant un changement de vitesse synchronisé, la commutation du groupe de coupure (GV) se produit directement après le désengagement de l'étage de réduction réel de la boîte de vitesses principale (HG, SH5).

7. Procédé selon l'une quelconque des revendications 1 à 5, **caractérisé en ce qu'**en cas de changement de vitesse relais vers une vitesse supérieure contenant une commutation d'un groupe de coupure (GV) à deux étages connecté en amont de la boîte de vitesses principale (HG) et permettant un changement de vitesse synchronisé, la commutation du groupe de coupure (GV) se produit approximativement simultanément avec la synchronisation de l'étage de réduction cible de la boîte de vitesses principale (HG, SH6).

8. Procédé de commande de changement de vitesse d'une boîte de vitesses à plusieurs groupes automatisée disposée dans une chaîne de transmission de véhicule automobile entre un moteur d'entraînement et un entraînement d'essieu et comprenant au moins une boîte de vitesses principale (HG, HG') à plusieurs étages ainsi qu'un groupe-relais (GP) à deux étages connecté en aval par rapport à elle et dans lequel la boîte de vitesses principale (HG, HG') est réalisée avec intermédiaire par le biais d'au moins un arbre intermédiaire (W_{VG1}, W_{VG}) pourvu d'un frein de boîte de vitesses (Br) commandable, l'arbre d'entrée (W_{GE}) étant relié au moteur d'entraînement par le biais d'un embrayage de coupure (K) commandable et la boîte de vitesses principale (HG, HG') ainsi que le groupe-relais (GP) pouvant respectivement être connectés par le biais d'embrayages à griffes non synchronisés réunis de façon appariée en un paquet de changement de vitesse (S1, S2, S1', S2', S3', SP) commun avec deux positions de changement de vitesse et une position neutre (N), une inversion entre deux étages de réduction se produisant respectivement en cas de changement de vitesse relais tant dans la boîte de vitesses principale (HG, HG') que dans le groupe-relais (GP), **caractérisé en ce qu'**un changement de vitesse relais vers une vitesse inférieure est réalisé avec les étapes suivantes:
SR1) sortie de charge du moteur d'entraînement ;
SR2a) désengagement de l'étage de réduction réel de la boîte de vitesses principale (HG = N) ; et
SR2b) débrayage total de l'embrayage de coupure (K = 0) ;
SR3a) synchronisation de l'étage de réduction cible de la boîte de vitesses principale (HG) par un actionnement du frein de boîte de vitesses (Br > 0) ; et
SR3b) début de la commande du moteur d'entraînement pour atteindre la vitesse de rotation cible de l'arbre d'entrée (W_{GE}) ;
SR4a) engagement de l'étage de réduction cible de la boîte de vitesses principale (HG) ; et
SR4b) désengagement de l'étage de réduction réel du groupe relais (GP = N) ;
SR5) synchronisation de l'étage de réduction cible du groupe relais (GP) par embrayage partiel de l'embrayage de coupure (K > 0) ;
SR6) engagement de l'étage de réduction cible du groupe relais (GP) ;
SR7a) embrayage total de l'embrayage de coupure (K = 1) ; et
SR7b) mise en charge du moteur d'entraînement.

9. Procédé selon la revendication 8, **caractérisé en ce qu'**en présence d'une boîte de vitesses principale (HG, HG') dans laquelle l'étage de réduction (G1, G1') inférieur et l'étage de réduction (G3, G4') supérieur sont associés à différents tronçons de changement de vitesse, la commutation de la boîte de vitesses principale (HG, HG') vers le tronçon de changement de vitesse de l'étage de réduction cible se produit approximativement simultanément avec la synchronisation de l'étage de réduction cible de la boîte de vitesses principale (HG, HG' ; SR3a).

10. Procédé selon la revendication 8 ou 9, **caractérisé en ce qu'**en cas de changement de vitesse relais vers une vitesse inférieure contenant une commutation d'un groupe de coupure (GV) à deux étages connecté en amont de la boîte de vitesses principale et permettant un changement de vitesse synchronisé, la commutation du groupe de coupure (GV) se produit directement avant l'engagement de l'étage de réduction cible de la boîte de vitesses principale (HG, SR4a).

11. Procédé selon l'une quelconque des revendications 1 à 10, **caractérisé en ce que** pendant la sortie de charge du moteur d'entraînement (SH1, SR1), l'embrayage de coupure (K) est déjà en partie débrayé au-delà de la limite de glissement.

12. Procédé selon l'une quelconque des revendications 1 à 11, **caractérisé en ce qu'**en cas de calcul d'une position dent sur dent de l'embrayage à griffes concerné survenant lors de l'engagement de l'étage de réduction cible de la boîte de vitesses principale (HG, HG' ; SH7, SR4a) et/ou du groupe relais (GP ; SH4, SR6), le déroulement du changement de vitesse se poursuit en maintenant la force de mise en place du débrayage concernée.

13. Procédé selon l'une quelconque des revendications 1 à 12, **caractérisé en ce qu'**il est utilisé dans une boîte de vitesses à plusieurs groupes comportant au moins une boîte de vitesses relais (HG, GP ; HG', GP) synchronisée.
